# EUROPEAN PATENT SPECIFICATION

(11) **EP 3 567 314 B1**
(45) Date of publication and mention of the grant of the patent: **30.12.2020**
(21) Application number: 19183683.2
(22) Date of filing: 18.09.2017
(51) Int. Cl.: F23R 3/28, F23D 14/78

(54) **NOZZLES WITH INTERNAL MANIFOLDING**
DÜSEN MIT INTERNEM VERTEILER
BUSES DOTÉES D'UN COLLECTEUR INTERNE

(30) Priority: 16.09.2016 US 201615268211
(43) Date of publication of application: 13.11.2019
(62) Document number(s) of the earlier application(s) in accordance with Art. 76 EPC: 17191544.0 / 3 296 639
(73) Proprietor: Delavan, Inc., West Des Moines, IA 50265 (US)
(72) Inventor: PROCIW, Lev Alexander, Johnston, IA 50131 (US); RYON, Jason A., Carlisle, IA 50047 (US)
(74) Representative: Dehns

(56) References cited:
- WO-A1-2015/092206
- US-A- 2 172 383
- US-A- 4 887 962
- US-A1- 2012 186 083

## Description

### BACKGROUND OF THE INVENTION

### 1. Field of the Invention

The present invention relates to nozzles, and more particularly to fuel nozzles such as those used in combustors of gas turbine engines.

### 2. Description of Related Art

A variety of engines typically incorporate fuel injectors or nozzles in their combustion sections in which fuel and air are mixed and combusted. Efficiency of combustion is related to a variety of factors including fuel-to-air ratio, ignition source location and degree of fuel atomization. Fuel is typically sprayed from a pressure atomizer and then mixed with flows of air.

Conventional fuel nozzles are bulky components and require numerous apertures in their high pressure combustor cases, i.e., where fuel injectors and/or fuel manifolds enter the combustor case. Although conventional fuel nozzles admit a large amount of air into the combustor, more air is usually required to protect the area in the combustor around the nozzle opening, meaning that not all of the air can enter the combustor through the nozzles themselves. Fuel is usually concentrated around conventional nozzles because it is admitted through nozzle components with very small diameters. US 2012/186083 A1 describes a multipoint injector for a turbomachine. US 4887962 A describes a partial combustion burner with spiral-flow cooled face. US 2172383 A describes a fuel injection device. WO 2015/092206 A1 describes an annular combustion chamber in a turbine engine.

Such conventional methods and systems have generally been considered satisfactory for their intended purpose. However, there is an ongoing need in the art for improved fuel nozzles. The present disclosure provides a solution for this need.

### SUMMARY OF THE INVENTION

A nozzle is described herein and defined in claim 1.

A method of assembling a liquid circuit is described herein and defined in claim 14. Further developments of the invention can be taken form the dependent claims.

### BRIEF DESCRIPTION OF THE DRAWINGS

So that those skilled in the art to which the subject disclosure appertains will readily understand how to make and use the devices and method of the subject disclosure without undue experimentation, preferred embodiments thereof will be described in detail herein below with reference to certain figures, wherein:
Fig. 1 is a perspective view of an exemplary embodiment of a nozzle constructed in accordance with the present disclosure, showing the manifold rings, heat shield, and bayonet features on the hot side of the nozzle;
Fig. 2 is a perspective view of the nozzle of Fig. 1, showing the cold side of the nozzle;
Fig. 3 is a cross-sectional perspective view of a portion of the nozzle of Fig. 1, showing the liquid swirler and showing the outer air circuit with the heat shield removed;
Fig. 4 is a cross-sectional side elevation view of the nozzle of Fig. 1, showing the radial air swirler assembled onto the nozzle body;
Fig. 5 is a perspective view of a the liquid swirler of Fig. 3, schematically showing one of the spiral liquid passages;
Fig. 6 is a perspective view of a portion of the nozzle of Fig. 1, showing the liquid swirler;
Fig. 7 is a cross-sectional perspective view of a portion of the liquid swirler of Fig. 6, showing one of the outlet orifices;
Fig. 8 is a cross-sectional elevation view of a portion of the nozzle of Fig. 1, schematically showing the inner air circuit, liquid circuit, and outer air circuit;
Fig. 9 is perspective view of the radial air swirler of Fig. 4, showing the radial swirl slots;
Fig. 10 is a perspective view of a plurality of nozzles of Fig. 1 assembled into a manifold assembly.

### DETAILED DESCRIPTION OF THE PREFERRED EMBODIMENTS

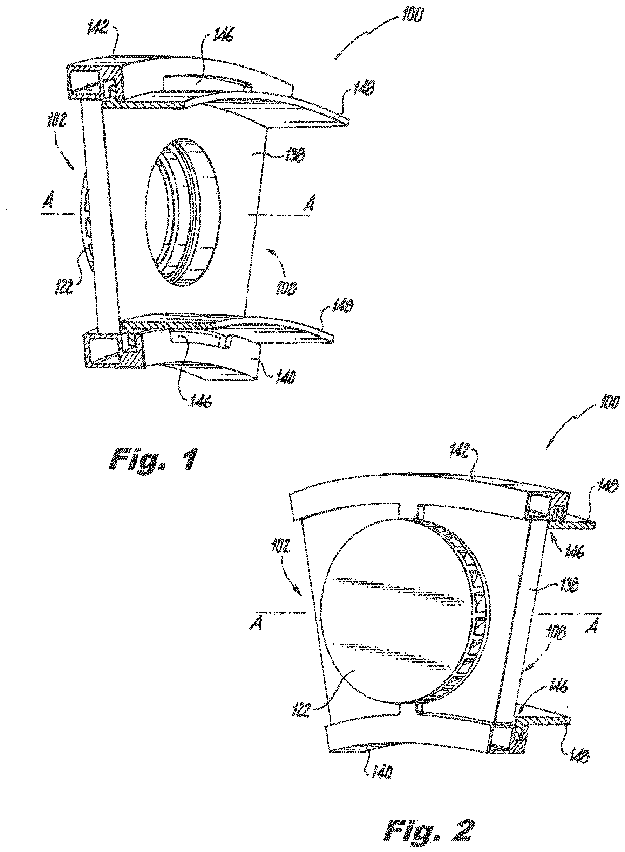

Reference will now be made to the drawings wherein like reference numerals identify similar structural features or aspects of the subject disclosure. For purposes of explanation and illustration, and not limitation, a partial view of an exemplary embodiment of a nozzle in accordance with the disclosure is shown in Fig. 1 and is designated generally by reference character 100. Other embodiments of nozzles in accordance with the disclosure, or aspects thereof, are provided in Figs. 2-10, as will be described. The systems and method described herein can be used to atomize liquids, such as in atomizing fuel in a gas turbine engine.

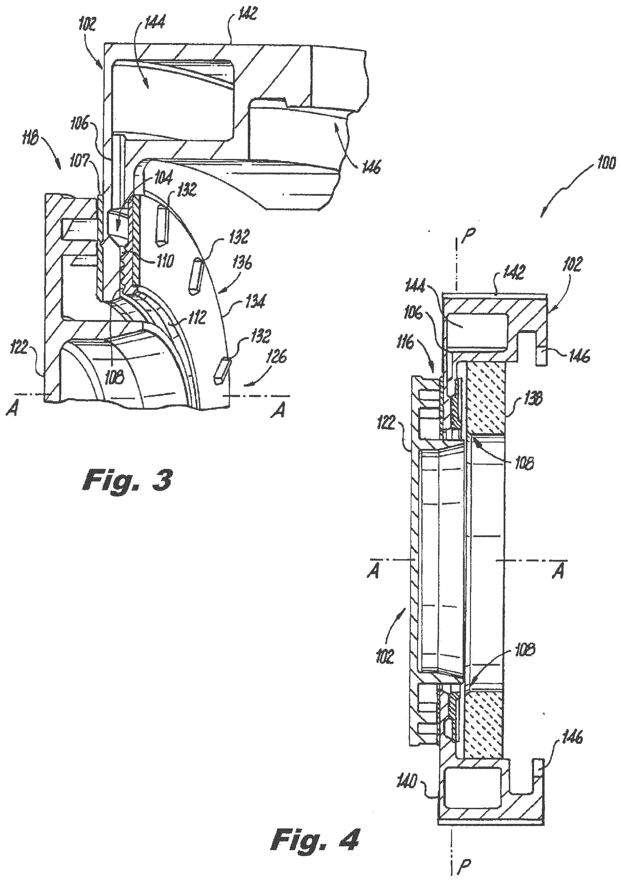

Nozzle 100 includes a nozzle body 102 defining a liquid circuit 104 (identified in Fig. 3) extending from a liquid inlet 106 to a liquid outlet 108. Nozzle 100 is an assembly of components, one of which is the nozzle body 102, and other components of the assembly are descried herein below. Fig. 1 shows nozzle 100 from a downstream, hot side, e.g., from within a combustor into which nozzle 100 issues a spray of fuel. Fig. 2 shows nozzle 100 from an upstream cold side, e.g., from within a compressor that supplies pressurized air through nozzle 100 for combustion in on the hot side.

With reference to Fig. 3, the liquid circuit 104 includes a plurality of grooves for spiral liquid passages 110 spiraling radially inward relative to a spray axis A. Each of the spiral liquid passages lies in a plane P normal to the spray axis A. Plane P is identified in Fig. 4. Those skilled in the art will readily appreciate that while all of the spiral liquid passages 110 are defined in a common plane P, it is also possible for each spiral liquid passage to be defined in a separate respective plane perpendicular to the spray axis A without departing from the scope of the appended claims. An upstream heat shield 107 is mounted to an upstream portion of nozzle body 102.

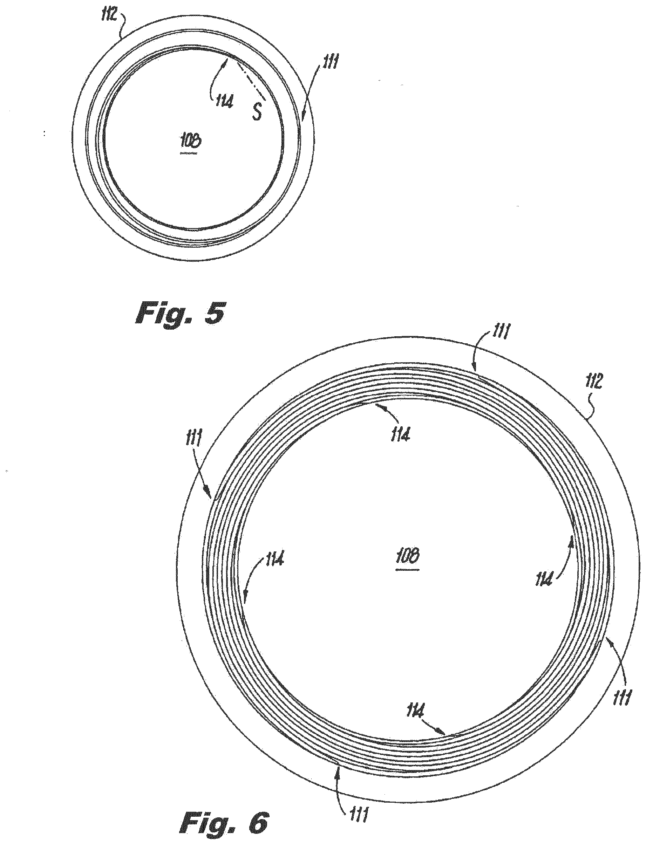

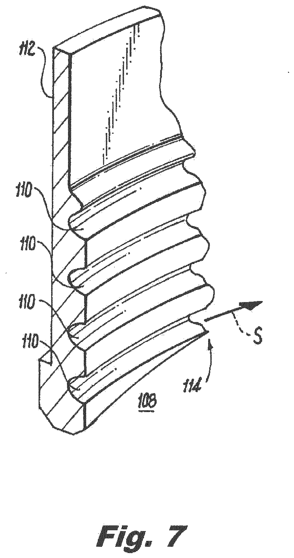

With reference now to Fig. 5, the spiral liquid passages 110 are defined on an annular liquid swirler 112. Fig. 5 only shows one of the spiral liquid passages 110, but Figs. 6 and 7 show four spiral liquid passages 110. Each spiral liquid passage 110 defines a respective inlet 111 and an outlet orifice 114 of the liquid outlet 108. Each outlet orifice 114 defines an orifice axis S that is has a tangential component relative to the spray axis A and lies in the plane P normal to the spray axis A (spray axis A and plane P are shown in Fig. 4). The angle of spray axis S relative to a true tangent about axis A is somewhat exaggerated in Figs. 5 and 7 for sake of clarity, as spray axis S is nearly tangential to a circumferential direction about axis A (which is identified in Fig. 4). The swirl direction induced on liquid issuing from outlet orifices 114 is indicated by the larger arrow in Fig. 7. There can be more than four passages 110 depending on the diameter of the nozzle. In many applications, one exit occurs every 1 to 1.5 inches (2.54 to 3.81 cm) around the liquid swirler 112. One of the benefits of these passages 110 is they provide a certain resistance to the liquid flow due to friction. They can be relative large (e.g. greater than 0.020 inches or 0.0508 cm) in flow area which is desired to avoid flow blockage but provide sufficient resistance based on length to divide the flow uniformly around the circumference. The relatively long length helps in cooling the wetted surface of the liquid swirler 112 despite it being immersed in substantial hot, flowing air.

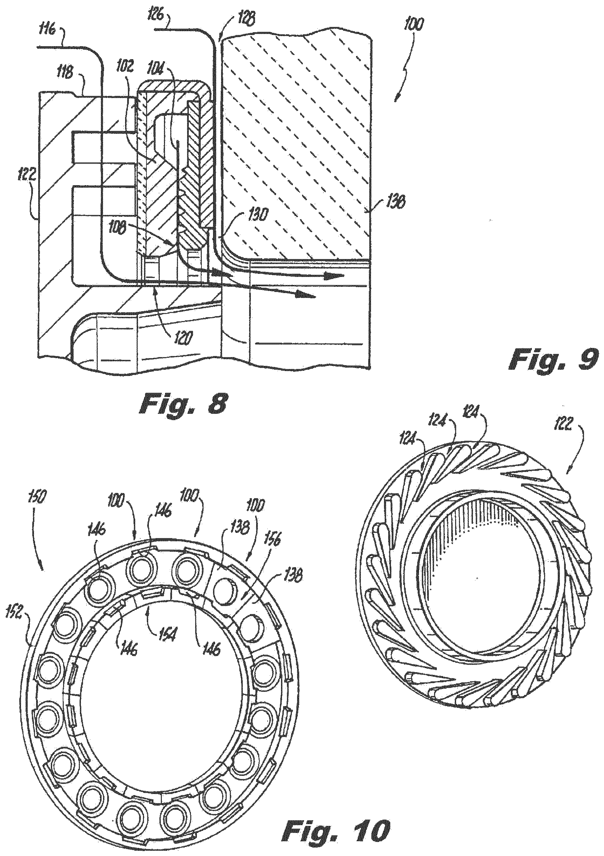

With reference now to Fig. 8, the nozzle body 102 includes an inner air circuit 116 passing inboard of the liquid outlet 108. The inner air circuit 116 extends radially inward from an inlet 118 thereof and turns in an axial direction, parallel with axis A in Fig. 4, to an outlet 120 thereof radially inboard of the liquid outlet 108. A radial air swirler 122 is mounted to the nozzle body 102. As shown in Fig. 9, radial air slots 124 are defined in the radial air swirler 122 to define an inlet 118 of the inner air circuit 116 shown in Fig. 8. The inner air circuit 116 and liquid circuit are in a co-swirling configuration, i.e. both circuits swirl in the same direction, however those skilled in the art will readily appreciate that any other suitable configuration can be used, including counter-swirling, without departing from the scope of the appended claims. Mixing therefor occurs in a very thin sheet at the exit of nozzle 100.

With continued reference to Fig. 8, the nozzle body 102 can include an outer air circuit 126 passing outboard of the liquid outlet 108. The outer air circuit 126 extends radially inward from an inlet 128 thereof and can turn in an axial direction, parallel to axis A shown in Fig. 4, to an outlet 130 thereof radially outboard of the liquid outlet 108. As shown in Fig. 3, the nozzle body 102 includes a plurality of spacers 132 extending from an annular face 134 of a downstream heat shield 136 of the nozzle body 102. The spacers 132 extend in a parallel direction to the spray axis A of Fig. 4. As shown in Fig. 8, a main heat shield 138 is mounted to the nozzle body 102 on a downstream face thereof, spaced apart from the nozzle body 102 by the spacers 132 (shown in Fig. 3), wherein the outer air circuit 126 is defined between the nozzle body 102, spacers 132, and heat shield 138. The spacers 132 define a non-tangential flow path for non-swirling issue of air through the outer air circuit 126. Inner and outer air circuits 116 and 128 sandwich the liquid from circuit 104 therebetween and shear the liquid for atomization. It is contemplated that the ratio of air flow can range from 50:50 to 40:60 inner to outer air flow, or any other suitable ratio. In an embodiment the nozzle body 102 comprises radial air swirler 122, upstream heat shield 107, liquid swirler 112, and downstream heat shield 136, which could be made as one additively manufactured component, or could be assembled as separate comments joined together.

With reference again to Fig. 4, nozzle body 102 includes an inner manifold ring segment 140 and an outer manifold ring segment 142, wherein outer ring segment 142 includes a liquid manifold passage 144 in fluid communication with the liquid inlet 106 of the liquid circuit 104. Inner ring segment 140 can optionally provide a similar liquid manifold passage, e.g., for multiple spray circuits or the like. Both the ring segments 140 and 142 include a bayonet features 146 configured to receive a corresponding bayonet feature of a combustor wall or combustor sliding support 148, shown in Fig. 1.

With reference now to Fig. 10, a manifold assembly 150 includes a plurality of nozzles 100 as described above. An outer manifold ring 152, made up of outer ring segments 142 of the respective nozzles 100, is in fluid communication with the liquid inlet 106 of each of the nozzles 100 to deliver liquid to the nozzles 100. The outer ring segments 142 are continuous with one another to form a continuous manifold ring 152. The nozzles 100 are circumferentially spaced apart around the manifold ring 152.

Assembly 150 includes an inner manifold ring 154, e.g. made up of inner ring segments 140 of the respective nozzles 100. The fuel nozzles 100 extend radially between the first and second manifold rings 152 and 154. Each manifold ring 152 and 154 can include bayonet features 146 as described above. Inner manifold ring 154 in the example shown in Fig. 10 is segmented as a stiffener ring, and is not therefore used for fuel manifolding. This accommodates thermal growth and shrinking of the nozzles 100 and outer manifold ring 152 relative to inner manifold ring 154. Outer ring 152 and nozzles 100 can be manufactured as a single integral component, e.g., using additive manufacturing. The heat shields 138 (shown in Figs. 1 and 2) tile together to define an upstream combustor dome wall 156 (for sake of clarity only some of the heat shields 138 are shown tiled together in Fig. 10). Due to the tiling of wall 156, the inner and outer air circuits 116 and 126 (shown in Fig. 8) are the only pathway for air to pass through the combustor dome wall 156.

Potential advantages of nozzles and assemblies as described herein include elimination of bulk compared to conventional nozzles, e.g. with fuel passages defined in conical geometries. This very compact (flat) design does not take up much axial length and can reduce the axial length of the engine (shafts, case, and the like) saving substantial weight as well as reduce drag on the engine nacelle. Fuel can be distributed in a relatively large diameter using a serpentine distributor, e.g., liquid swirler 112. Air that is admitted as part of the nozzle can also be used to cool the backside of the combustor, e.g., the cold side of nozzles 100, before it enters the combustor. An internal fuel manifold, e.g., in the manifold rings 152 and 154, can reduce weight and eliminate numerous holes in the combustor case used for traditional fuel injectors to access the interior of the combustor case. Light weight ceramic matrix composite (CMC) materials can be advantageously used in the construction of the major elements.

The method and systems of the present invention, as described above and shown in the drawings, provide for liquid injection with superior properties including compactness, light weight, and advantageous spray patternation.

## Claims

1. A nozzle (100) comprising:
a nozzle body (102) defining a liquid circuit extending from a liquid inlet (111) to a liquid outlet (108), wherein the liquid circuit includes at least one spiral liquid passage (110) spiraling radially inward relative to a spray axis (A), wherein each of the at least one spiral liquid passages (110) lies in a plane normal to the spray axis (A), **characterized in that** the nozzle body (102) includes an outer air circuit (126) passing outboard of the liquid outlet (108), wherein the nozzle body (102) includes a plurality of spacers extending from an annular face of the nozzle body (102) in a parallel direction to the spray axis (A), and further comprising a heat shield (138) mounted to the nozzle body (102), spaced apart from the nozzle body (102) by the spacers (132), wherein the outer air circuit (126) is defined between the nozzle body (102), spacers (132), and heat shield (136).

2. A nozzle as recited in claim 1, wherein each of the at least one spiral liquid passage (110) defines a respective outlet orifice (114) of the liquid outlet (108).

3. A nozzle as recited in claim 2, wherein each outlet orifice (114) defines an orifice axis (S) that has a tangential component relative to the spray axis (A) and lies in the plane (P) normal to the spray axis (A).

4. A nozzle as recited in claim 1, wherein the nozzle body (102) includes an inner air circuit (116) passing inboard of the liquid outlet (108).

5. A nozzle as recited in claim 4, wherein the inner air circuit (116) extends radially inward from an inlet (118) thereof and turns in an axial direction to an outlet thereof radially inboard of the liquid outlet (108), and/or further comprising a radial air swirler (122) mounted to the nozzle body (102), wherein radial air slots defined in the radial air swirler define an inlet (118) of the inner air circuit (116), and/or wherein the inner air circuit (116) and liquid circuit are in a co-swirling configuration.

6. A nozzle as recited in claim 1, wherein the outer air circuit (126) extends radially inward from an inlet (128) thereof and turns in an axial direction to an outlet (130) thereof radially outboard of the liquid outlet (108).

7. A nozzle as recited in claim 1, wherein the spacers (132) define a non-tangential flow path for non-swirling issue of air through the outer air circuit (126).

8. A nozzle as recited in any preceding claim, wherein the nozzle body (102) includes inner (140) and outer manifold ring segments (142), wherein at least one of the ring segments (140, 142) includes a liquid manifold passage in fluid communication with the liquid inlet of the liquid circuit.

9. A nozzle as recited in claim 8, wherein at least one of the ring segments (140, 142) includes a bayonet feature (146) configured to receive a corresponding bayonet feature of a combustor wall or combustor sliding support (148).

10. A manifold assembly (150) comprising:
a plurality of said nozzles (100) of any preceding claim, wherein the liquid circuit includes a plurality of said spiral liquid passages (110) spiraling radially inward relative to said spray axis, wherein the spiral liquid passages (110) all lie in a plane normal to the spray axis; and
a manifold ring (152, 154) in fluid communication with the liquid inlet (111) of each of the nozzles (100) to deliver liquid to the nozzles (100), wherein the nozzles (100) are circumferentially spaced apart around the manifold ring (152, 154).

11. A manifold assembly as recited in claim 10, wherein the manifold ring (152, 154) is a first manifold ring (152), and further comprising a second manifold ring (154), wherein the fuel nozzles (100) extend radially between the first and second manifold rings, and/or wherein each manifold ring (152, 154) includes bayonet features (146), wherein the bayonet features (146) of each manifold ring are interlocked with a bayonet feature of a combustor wall or combustor sliding support (148).

12. A manifold assembly as recited in claim 10 or 11, wherein each of the nozzles (100) includes a heat shield mounted to a downstream face thereof, wherein the heat shields define an upstream combustor dome wall, and preferably wherein each nozzle includes an inner air circuit (116) passing inboard of the liquid outlet (108) and an outer air circuit (126) passing outboard of the liquid outlet (108), wherein the inner (116) and outer air circuits (126) are the only pathway for air to pass through the combustor dome wall.

13. A manifold assembly as recited in claim 10, 11 or 12, wherein for each nozzle (100), each spiral liquid passage (110) defines a respective outlet orifice (114) of the liquid outlet (108).

14. A method of assembling a liquid circuit comprising:
abutting a liquid swirler with at least one groove defined therein against a nozzle body (102) so the at least one groove forms a spiral liquid passage (110) that spirals radially inward relative to a spray axis, each of the at least one spiral liquid passages (110) laying in a plane normal to the spray axis, **characterized in that** the nozzle body (102) includes an outer air circuit (126) passing outboard of the liquid outlet (108), wherein the nozzle body (102) includes a plurality of spacers extending from an annular face of the nozzle body (102) in a parallel direction to the spray axis (A), and further comprising a heat shield (138) mounted to the nozzle body (102), spaced apart from the nozzle body (102) by the spacers (132), wherein the outer air circuit (126) is defined between the nozzle body (102), spacers (132), and heat shield (136).

## Patentansprüche

1. Düse (100), umfassend:
einen Düsenkörper (102), der einen Flüssigkeitskreislauf definiert, der sich von einem Flüssigkeitseinlass (111) zu einem Flüssigkeitsauslass (108) erstreckt, wobei der Flüssigkeitskreislauf mindestens einen spiralförmigen Flüssigkeitskanal (110) beinhaltet, der sich spiralförmig radial einwärts relativ zu einer Sprühachse (A) bewegt, wobei jeder des mindestens einen spiralförmigen Flüssigkeitskanals (110) in einer Ebene senkrecht zur Sprühachse (A) liegt, **dadurch gekennzeichnet, dass** der Düsenkörper (102) einen äußeren Luftkreislauf (126) beinhaltet, der außerhalb des Flüssigkeitsauslasses (108) verläuft, wobei der Düsenkörper (102) eine Vielzahl von Abstandstücken beinhaltet, die sich von einer ringförmigen Seite des Düsenkörpers (102) in einer parallelen Richtung zur Sprühachse (A) erstrecken, und ferner einen Hitzeschild (138) umfassend, der an dem Düsenkörper (102) montiert ist und von dem Düsenkörper (102) durch die Abstandstücke (132) beabstandet ist, wobei der äußere Luftkreislauf (126) zwischen dem Düsenkörper (102), den Abstandstücken (132) und dem Hitzeschild (136) definiert ist.

2. Düse nach Anspruch 1, wobei jeder aus dem mindestens einen spiralförmigen Flüssigkeitskanal (110) eine jeweilige Auslassöffnung (114) des Flüssigkeitsauslasses (108) definiert.

3. Düse nach Anspruch 2, wobei jede Auslassöffnung (114) eine Öffnungsachse (S) definiert, die eine tangentiale Komponente relativ zur Sprühachse (A) aufweist und in der Ebene (P) senkrecht zur Sprühachse (A) liegt.

4. Düse nach Anspruch 1, wobei der Düsenkörper (102) einen inneren Luftkreislauf (116) beinhaltet, der innerhalb des Flüssigkeitsauslasses (108) verläuft.

5. Düse nach Anspruch 4, wobei sich der innere Luftkreislauf (116) radial einwärts von einem Einlass (118) davon erstreckt und sich in einer axialen Richtung zu einem Auslass davon radial innerhalb des Flüssigkeitsauslasses (108) dreht, und/oder ferner einen radialen Luftverwirbler (122) umfassend, der an dem Düsenkörper (102) befestigt ist, wobei radiale Luftschlitze, die in dem radialen Luftverwirbler definiert sind, einen Einlass (118) des inneren Luftkreislaufs (116) definieren, und/oder wobei der innere Luftkreislauf (116) und der Flüssigkeitskreislauf in einer gemeinsam wirbelnden Konfiguration stehen.

6. Düse nach Anspruch 1, wobei sich der äußere Luftkreislauf (126) radial einwärts von einem Einlass (128) davon erstreckt und sich in einer axialen Richtung zu einem Auslass (130) davon radial außerhalb des Flüssigkeitsauslasses (108) dreht.

7. Düse nach Anspruch 1, wobei die Abstandstücke (132) einen nicht tangentialen Strömungsweg für nicht wirbelnden Ausstrom von Luft durch den äußeren Luftkreislauf (126) definieren.

8. Düse nach einem der vorstehenden Ansprüche, wobei der Düsenkörper (102) ein inneres (140) und ein äußeres Verteilerringsegment (142) beinhaltet, wobei mindestens eines der Ringsegmente (140, 142) einen Flüssigkeitsverteilerkanal in Fluidkommunikation mit dem Flüssigkeitseinlass des Flüssigkeitskreislaufs beinhaltet.

9. Düse nach Anspruch 8, wobei mindestens eines der Ringsegmente (140, 142) ein Bajonettelement (146) beinhaltet, das so konfiguriert ist, dass es ein entsprechendes Bajonettelement einer Brennkammerwand oder eine Brennkammergleitlagers (148) aufnimmt.

10. Verteileranordnung (150), umfassend:
eine Vielzahl der Düsen (100) nach einem der vorstehenden Ansprüche, wobei der Flüssigkeitskreislauf eine Vielzahl der spiralförmigen Flüssigkeitskanäle (110) beinhaltet, die sich spiralförmig radial einwärts relativ zur Sprühachse bewegen, wobei die spiralförmigen Flüssigkeitskanäle (110) alle in einer Ebene senkrecht zur Sprühachse liegen; und
einen Verteilerring (152, 154) in Fluidkommunikation mit dem Flüssigkeitseinlass (111) jeder der Düsen (100), um Flüssigkeit zu den Düsen (100) zu liefern, wobei die Düsen (100) in Umfangsrichtung um den Verteilerring (152, 154) beabstandet sind.

11. Verteileranordnung nach Anspruch 10, wobei der Verteilerring (152, 154) ein erster Verteilerring (152) ist, und ferner einen zweiten Verteilerring (154) umfassend, wobei sich die Kraftstoffdüsen (100) radial zwischen dem ersten und dem zweiten Verteilerring erstrecken, und/oder wobei jeder Verteilerring (152, 154) Bajonettelemente (146) beinhaltet, wobei die Bajonettelemente (146) jedes Verteilerrings mit einem Bajonettelement einer Brennkammerwand oder eines Brennkammergleitlagers (148) verriegelt sind.

12. Verteileranordnung nach Anspruch 10 oder 11, wobei jede der Düsen (100) einen Hitzeschild beinhaltet, der an einer stromabwärtigen Seite davon befestigt ist, wobei der Hitzeschild eine stromaufwärtige Brennkammerdomwand definiert, und bevorzugt jede Düse einen inneren Luftkreislauf (116), der innerhalb des Flüssigkeitsauslass (108) verläuft, und einen äußeren Luftkreislauf (126) beinhaltet, der außerhalb des Flüssigkeitsauslasses (108) verläuft, wobei der innere (116) und der äußere Luftkreislauf (126) die einzigen Wege sind, über die Luft durch die Brennkammerdomwand strömen kann.

13. Verteileranordnung nach Anspruch 10, 11 oder 12, wobei für jede Düse (100) jeder spiralförmige Flüssigkeitskanal (110) eine jeweilige Auslassöffnung (114) des Flüssigkeitsauslasses (108) definiert.

14. Verfahren zum Zusammenbauen eines Flüssigkeitskreislaufs, umfassend:
Angrenzenlassen eines Flüssigkeitsverwirblers mit mindestens einer Nut, die darin definiert ist, an einen Düsenkörper (102), so dass die mindestens eine Nut einen spiralförmigen Flüssigkeitskanal (110) bildet, der sich spiralförmig radial einwärts relativ zur Sprühachse bewegt, wobei der mindestens eine spiralförmige Flüssigkeitskanal (110) in einer Ebene senkrecht zur Sprühachse liegt, **dadurch gekennzeichnet, dass**
der Düsenkörper (102) einen äußeren Luftkreislauf (126) beinhaltet, der außerhalb des Flüssigkeitsauslasses (108) verläuft, wobei der Düsenkörper (102) eine Vielzahl von Abstandstücken beinhaltet, die sich von einer ringförmigen Seite des Düsenkörpers (102) in einer parallelen Richtung zur Sprühachse (A) erstrecken, und ferner einen Hitzeschild (138) umfassend, der an dem Düsenkörper (102) montiert ist und von dem Düsenkörper (102) durch die Abstandstücke (132) beabstandet ist, wobei der äußere Luftkreislauf (126) zwischen dem Düsenkörper (102), den Abstandstücken (132) und dem Hitzeschild (136) definiert ist.

## Revendications

1. Buse (100) comprenant :
un corps de buse (102) définissant un circuit de liquide s'étendant d'une entrée de liquide (111) à une sortie de liquide (108), dans laquelle le circuit de liquide comporte au moins un passage de liquide en spirale (110) radialement en spirale vers l'intérieur par rapport à un axe de pulvérisation (A), dans laquelle chacun des au moins un passages de liquide en spirale (110) se trouve dans un plan perpendiculaire à l'axe de pulvérisation (A), **caractérisée en ce que**
le corps de buse (102) comporte un circuit d'air extérieur (126) passant à l'extérieur de la sortie de liquide (108), dans laquelle le corps de buse (102) comporte une pluralité d'entretoises s'étendant depuis une face annulaire du corps de buse (102) dans une direction parallèle à l'axe de pulvérisation (A), et comprenant en outre un écran thermique (138) monté sur le corps de buse (102), espacé du corps de buse (102) par les entretoises (132), dans laquelle le circuit d'air extérieur (126) est défini entre le corps de buse (102), les entretoises (132) et l'écran thermique (136).

2. Buse selon la revendication 1, dans laquelle chacun de l'au moins un passage de liquide en spirale (110) définit un orifice de sortie respectif (114) de la sortie de liquide (108).

3. Buse selon la revendication 2, dans laquelle chaque orifice de sortie (114) définit un axe d'orifice (S) qui a une composante tangentielle par rapport à l'axe de pulvérisation (A) et se trouve dans le plan (P) perpendiculaire à l'axe de pulvérisation (A).

4. Buse selon la revendication 1, dans laquelle le corps de buse (102) comporte un circuit d'air intérieur (116) passant à l'intérieur de la sortie de liquide (108).

5. Buse selon la revendication 4, dans laquelle le circuit d'air intérieur (116) s'étend radialement vers l'intérieur depuis une entrée (118) de celui-ci et tourne dans une direction axiale vers une sortie de celui-ci radialement à l'intérieur de la sortie de liquide (108), et/ou comprenant en outre un tourbillonneur d'air radial (122) monté sur le corps de buse (102), dans laquelle des fentes d'air radiales définies dans le tourbillonneur d'air radial définissent une entrée (118) du circuit d'air intérieur (116), et/ou dans laquelle le circuit d'air intérieur (116) et le circuit de liquide sont dans une configuration de co-tourbillonnement.

6. Buse selon la revendication 1, dans laquelle le circuit d'air extérieur (126) s'étend radialement vers l'intérieur depuis une entrée (128) de celui-ci et tourne dans une direction axiale vers une sortie (130) de celui-ci radialement à l'extérieur de la sortie de liquide (108).

7. Buse selon la revendication 1, dans laquelle les entretoises (132) définissent un trajet d'écoulement non tangentiel pour une émission d'air sans tourbillonnement à travers le circuit d'air extérieur (126).

8. Buse selon une quelconque revendication précédente, dans laquelle le corps de buse (102) comporte des segments de bague de collecteur interne (140) et externe (142), dans lequel au moins l'un des segments de bague (140, 142) comporte un passage de collecteur de liquide en communication fluidique avec l'entrée de liquide du circuit de liquide.

9. Buse selon la revendication 8, dans laquelle au moins l'un des segments de bague (140, 142) comporte un élément à baïonnette (146) configuré pour recevoir un élément à baïonnette correspondant d'une paroi de chambre de combustion ou d'un support coulissant de chambre de combustion (148).

10. Ensemble collecteur (150) comprenant :
une pluralité desdites buses (100) selon une quelconque revendication précédente, dans lequel le circuit de liquide comporte une pluralité desdits passages de liquide en spirale (110) radialement en spirale vers l'intérieur par rapport audit axe de pulvérisation, dans lequel les passages de liquide en spirale (110) se trouvent tous dans un plan perpendiculaire à l'axe de pulvérisation ; et
une bague de collecteur (152, 154) en communication fluidique avec l'entrée de liquide (111) de chacune des buses (100) pour délivrer du liquide aux buses (100), dans lequel les buses (100) sont espacées circonférentiellement autour de la bague de collecteur (152, 154).

11. Ensemble collecteur selon la revendication 10, dans lequel la bague de collecteur (152, 154) est une première bague de collecteur (152), et comprenant en outre une seconde bague de collecteur (154), dans lequel les buses de carburant (100) s'étendent radialement entre les première et secondes bagues de collecteur, et/ou dans lequel chaque bague de collecteur (152, 154) comporte des éléments à baïonnette (146), dans lequel les éléments à baïonnette (146) de chaque bague de collecteur sont verrouillés avec un élément à baïonnette d'une paroi de chambre de combustion ou d'un support coulissant de chambre de combustion (148).

12. Ensemble collecteur selon la revendication 10 ou 11, dans lequel chacune des buses (100) comporte un écran thermique monté sur une face aval de celles-ci, dans lequel les écrans thermiques définissent une paroi de dôme de chambre de combustion amont, et de préférence dans lequel chaque buse comporte un circuit d'air intérieur (116) passant à l'intérieur de la sortie de liquide (108) et un circuit d'air extérieur (126) passant à l'extérieur de la sortie de liquide (108), dans lequel les circuits d'air intérieur (116) et extérieur (126) sont la seule voie pour que l'air traverse la paroi de dôme de chambre de combustion.

13. Ensemble collecteur selon la revendication 10, 11 ou 12, dans lequel pour chaque buse (100), chaque passage de liquide en spirale (110) définit un orifice de sortie respectif (114) de la sortie de liquide (108).

14. Procédé d'assemblage d'un circuit de liquide comprenant :
la mise en butée d'un tourbillonneur de liquide avec au moins une rainure définie à l'intérieur contre un corps de buse (102) de sorte que l'au moins une rainure forme un passage de liquide en spirale (110) qui s'enroule en spirale radialement vers l'intérieur par rapport à un axe de pulvérisation, chacun des au moins un passages de liquide en spirale (110) s'étendant dans un plan perpendiculaire à l'axe de pulvérisation, **caractérisé en ce que**
le corps de buse (102) comporte un circuit d'air extérieur (126) passant à l'extérieur de la sortie de liquide (108), dans lequel le corps de buse (102) comporte une pluralité d'entretoises s'étendant depuis une face annulaire du corps de buse (102) dans une direction parallèle à l'axe de pulvérisation (A), et comprenant en outre un écran thermique (138) monté sur le corps de buse (102), espacé du corps de buse (102) par les entretoises (132), dans lequel le circuit d'air extérieur (126) est défini entre le corps de buse (102), les entretoises (132), et l'écran thermique (136).
